# EUROPEAN PATENT SPECIFICATION

(11) **EP 0 706 501 B1**
(45) Date of publication and mention of the grant of the patent: **07.01.1998**
(21) Application number: 95904346.4
(22) Date of filing: 28.06.1994
(51) Int. Cl.: C03C 25/02

(54) **A METHOD OF PRODUCING A MINERAL FIBER WEB, A HEAT CURABLE BONDING AGENT, A MINERAL FIBER CONTAINING PRODUCT AND THE USE OF A HEAT EXPANDABLE AGENT**
VERFAHREN ZUR HERSTELLUNG EINES MINERALFASERGEWEBES, EIN WÄRMEHÄRTBARES KLEBEMITTEL, EIN MINERALFASER ENTHALTENDES PRODUKT UND DIE VERWENDUNG EINES WÄRMEAUSDEHNUNGSMITTEL
PROCEDE DE FABRICATION D'UNE BANDE EN FIBRES MINERALES, AGENT ADHESIF DURCISSABLE THERMIQUEMENT, PRODUIT CONTENANT LES FIBRES MINERALES ET UTILISATION D'UN AGENT THERMOEXPANSIBLE

(30) Priority: 01.07.1993 DK 78293
(43) Date of publication of application: 17.04.1996
(73) Proprietor: Rockwool International A/S, 2640 Hedehusene (DK)
(72) Inventor: CLAUSEN, Anders, Ulf, DK-4600 Köge (DK)
(74) Representative: Nielsen, Henrik Sten
(86) International application number: DK9400263
(87) International publication number: WO9501314

(56) References cited:
- EP-A- 0 058 141
- DK-B- 120 579

## Description

The present invention generally relates to the technical field of producing mineral fiber plates. Mineral fibers generally comprise fibers, also known as Man Made Vitreous Fibers (MMVF), such as rock-wool fibers, slag wool fibers, glass fibers, etc. Mineral fibers are usually used for producing mineral fiber products which are used mainly for thermal insulation, fire insulation, fire protection, noise reduction, noise regulation, growth media, etc. More precisely, the present invention relates to a novel technique of producing a non-woven mineral fiber web from which mineral fiber-containing plates or products are cut or produced, respectively. The mineral fiber plates produced from the mineral fiber web produced in accordance with the present invention exhibit advantageous characteristics as to mechanical performance, such as modulus of elasticity and strength, low weight, reduced content of bonding agents and good thermal-insulating property.

Non-woven mineral fiber webs are normally produced as webs, i.e. webs in which the mineral fibers of which the mineral fiber web is composed, are normally linked together by means of droplets or particles of a heat-curable bonding agent which is cured by exposure to heat. For providing a mineral fiber web of adequate mechanical performance and mechanical integrity, such as electricity and strength, a certain amount of cured bonding agent has to be present. Hitherto, an excessive amount of bonding agent has normally been used for providing adequate mechanical performance and integrity such as an amount of bonding agent of the order of 10% - 30% by weight of the mineral fiber web.

An object of the present invention is to provide a novel method of producing a mineral fiber web from which mineral fiber containing products may be produced which method renders it possible in an online production plant to produce mineral fiber containing plates or products which are of a structure equal in terms of mechanical performance to prior art mineral fiber plates or products still including a reduced amount of bonding agent.

A further object of the present invention is to provide a novel method of producing a mineral fiber web from which mineral fiber containing products may be produced which method renders it possible in an online production plant to produce mineral fiber containing plates or products which exhibit improved mechanical performance such as modulus of elasticity and strength as compared to similar mineral fiber containing plates or products of the same content of bonding agent.

A particular advantage of the present invention relates to the novel mineral fiber containing product according to the present invention and produced in accordance with the method according to the present invention which as compared to prior art mineral fiber containing products includes less bonding agent and is consequently less costly than the prior art mineral fiber containing products, still exhibiting advantages as compared to the prior art mineral fiber containing products relating to mechanical performance and thermal- insulating properties.

A further advantage of the present invention relates to the fact that the amount of bonding agent used for producing a mineral fiber containing product of a specific type is reduced in accordance with the method according to the present invention as the amount of bonding agent may be reduced in a mineral fiber containing product according to the present invention as compared to a prior art mineral fiber containing product of similar properties in terms of mechanical strength and thermal-insulating properties.

A particular feature of the present invention relates to a unique application of the heat-expandable agent constituting a component of the heat-curable bonding agent to be used in producing mineral fiber products according to the present invention in accordance with the method according to the present invention providing a reduction of the amount of heat-curable bonding agent needed for providing a mineral fiber containing product of a specific mechanical performance further exhibiting a reduced inflammability as compared to a prior art mineral fiber containing product of identical or similar mechanical performance.

The above objects, the above advantages and the above feature together with numerous other objects, advantages, and features which will be evident from the below detailed description of preferred embodiments of the invention are in accordance with a first aspect of the present invention obtained by a method of producing a mineral fiber, comprising:
producing a non-woven mineral fiber web including mineral fibers and droplets or particles of a heat-curable bonding agent and
heating the non-woven mineral fiber web to an elevated temperature for causing the heat-curable bonding agent to cure, the heat-curable bonding agent including a heat-expandable agent and constituting less than 10% by weight of the mineral fiber web, the heat-expandable agent being capable of generating a volumetric expansion of the droplets or particles of approx. 2 - 1,000 times, by exposure to the elevated temperature, and causing the droplets or particles of the heat-curable bonding agent when heated to the elevated temperature to volumetrically expand for substantially increasing the bonding agent contact between the mineral fibers of the non-woven fiber web.

According to the invention, the heat-curable bonding agent may constitute less than 5%, such as 1-5%, further preferably less than 2% by weight of said mineral fiber web, and said heat-expandable agent is capable of generating a volumetric expansion of said droplets and particles of preferably 5-500 times, further preferably 10-100 times.

According to the first aspect of the present invention, a heat-expandable-agent capable of generating a volumetric expansion of the droplets or particles of the heat-curable bonding agent is used for improving the mechanical properties of the mineral fiber product produced in accordance with the method according to the first aspect of the present invention or alternatively or additionally reducing the amount of heat-curable bonding agent of the mineral fiber containing product produced in accordance with the method according to the first aspect of the present invention as compared to the prior art mineral fiber containing product of similar or identical mechanical properties in terms of mechanical performance, such as modulus of elasticity and strength, and thermal-insulating properties.

It is to be realized that the heat-expandable agent constitutes a component of the heat-curable agent such as an amount of typically 0,05% - 1% by weight of the heat-curable bonding agent which further constitutes only a minor percentage of the mineral fiber containing product such as an amount of less than 10%, such as less than 5% of the mineral fiber containing product. According to the prior art, it has been attempted to provide composite products containing foamed materials and mineral fibers, vide e.g. DK patent No. 120,579, published European patent application, publiction No. 0058 141, US patent No. 5,123,949 and US patent No. 3,050,427. According to the techniques described in the above US patents and numerous other prior art references, the foamed materials of the prior art are used for providing a composite mineral fiber containing product in which the mineral fibers and the foamed materials of the composite product provide an integral interlinked and intermeshed structure. A totally different usage of the heat-expandable agent constituting a component of the heat-curable bonding agent is accomplished in accordance with the teachings of the present invention as the heat-expandable agent according to the teachings of the present invention constitute only a fraction of the heat-curable bonding agent and serve the purpose of causing an expansion of the heat-curable bonding agent for increasing the probability that any specific droplet or particle of the heat-curable bonding agent is caused to provide a linkage between any two or more adjacent mineral fibers linking the two or more mineral fibers together after the heat-curable bonding agent has been cured and after the heat-expandable agent has caused the droplet or particle in question to expand volumetrically.

According to the above Danish patent No. 120,579, a composite foamed and mineral fiber product is produced in which product the mineral fibers consitute a filling of the interspaces between the foamed material. The foamed material is produced by causing a resin to expand by the evaporation of water which resin constitutes on the one hand the foamed material and on the other hand the bonding agent linking the mineral fibers together within the foamed structure. The amount of foamed material constitutes 5-85% by weight of the total product.

In the above published European patent application, publication No. 0 058 141, a resin-impregnated fiber composite material is described together with a method of producing the material. The material constitute like the above described product known from the above mentioned Danish patent a foamed product including glass or mineral fibers as described. The amount of fibers in the composite material is stated to be 10-150 parts by weight, per 100 parts by weight of the total weight of resin and microspheres, which microspheres are caused, in a low temperature treatment, i.e. a treatment in which the temperature is not raised above 150°C, to expand. The ratio of microspheres to resin is stated to be within the range 15:85 to 30:70. The microspheres are caused to expand and constitute an integral reinforcing structure which is homogeneously distributed in the glass or mineral fibers for producing the integral composite foamed glass or mineral fiber material.

According the the presently preferred embodiment of the method according to the present invention, the droplets or particles have diameters prior to exposure to the elevated temperature within the range 3-2,000 µm, such as 10-500 µm, preferably 50-150 µm as it has been realized that particles or droplets of diameters smaller than the above range or larger than the above range are likely to provide no linkage between any two or more adjacent mineral fibers or solely provide a large cured or solidified bonding agent sphere which in view of its large diameter preferably should have been substituted by a plurality or smaller diameters droplets or particles providing more linkages between the mineral fibers of the mineral fiber containing product improving the mechanical properties of the mineral fiber containing product.

Dependent on the heat-curable bonding agent and the heat-expandable agent in question and in particular the profile of viscosity and expansion, respectively, when exposed to heat, the heat-expandable agent may be selected so as to provide a volumetric expansion of the heat-curable bonding agent within any specific and relevant temperature range within which the heat-curable bonding agent is capable of adhering to adjacent mineral fibers and, due to capillary action and surface tension properties, capable of providing linkage between the mineral fibers.

According to the presently preferred embodiment of the method according to the first aspect of the present invention, the heating of the non-woven mineral fiber web comprises progressive heating of the non-woven mineral fiber web.

Further preferably, the heat-expandable agent generating the volumetric expansion of the droplets or particles of the heat-curable bonding agent is selected so as to cause the volumetric expansion within a specific relevant temperature range determined by the melting and viscosity profile of the heat-curable bonding agent in question. The heat-expandable agent may according to preferred, alternative embodiments generate the volumetric expansion at a temperature of approx. 80-400°C, such as 120-250°C, preferably 150-200°C, and the heat-curable bonding agent preferably cures at a temperature of approx. 40-400°C, preferably 150-200°C.

The volumetric expansion of the heat-curable bonding agent generated by the heat-expandable agent may have any physical or chemical origin and thus, according to a first embodiment, the heat-expandable agents may be a blowing agent such as an agent liberating a gas, e.g. N₂, CO₂, NH₃, or H₂O, by exposure to said elevated temperature. Examples of heat-expandable agents capable of liberating a gas such as one of the above mentioned gases by exposure to the elevated temperature are azo compounds, carbazides, semi-carbazides, hydrozides or combinations thereof or similar chemical compounds. According to an alternative embodiment, the heat-expandable agent is constituted by microspheres each comprising a shell within which a fluid agent is confined. The shell is preferably insoluble by the heat-curable bonding agent in order to prevent that the material of the cell confining the fluid agent is deteriorated by the heat-curable bonding agent. The shell may be made of any appropriate material such as thermoplastic material, starch, a polymeric material, such as PP, PE, PVC, polyacrylamides, acrylonitriles, polybutylenes, a copolymeric material or the like or combinations thereof, and said fluid agent being hydrocarbons, such as alcanes, or N₂, CO₂, NH₃ or H₂O or the like or combinations thereof. The microspheres should have outer dimensions allowing that the heat-curable bonding agent may establish droplets or particles of the above diameter range. Consequently, the microspheres preferably have outer diameters of the order of 1-30 µm, such as 2-10 µm, preferably 2-5 µm.

The heat-expandable agent constitute as indicated above a constituent or component of the heat-curable bonding agent which further constitutes a minor percentage of the initial mineral fiber containing product. According to a preferred embodiment of the method according to the first aspect of the present invention, the heat-expandable agent constitutes approx. 0.02 - 50% by weight of the heat-curable bonding agent, such as 0.05 - 5%, preferably 0.05 - 1%.

The above objects, the above advantages and the above feature together with numerous other objects, advantages, and features which will be evident from the below detailed description of preferred embodiments of the invention are in accordance with a second aspect of the present invention obtained by a heat-curable bonding agent for use in the method according to the first aspect of the present invention and for bonding mineral fibers of a mineral fiber web together and comprising a heat-expandable agent, the heat-curable bonding agent being curable when heated to an elevated temperature, the heat-expandable agent constituting approx. 0.02 - 50% by weight of the heat-curable bonding agent, and being capable of generating a volumetric expansion of droplets or particles of the heat-curable bonding agent of approx. 2 - 1,000 times by exposure to the elevated temperature.

The heat-curable bonding agent according to the second aspect of the present invention is preferably implemented in accordance with the above discussed preferred embodiments of the method according to the first aspect of the present invention.

The above objects, the above advantages and the above feature together with numerous other objects, advantages, and features which will be evident from the below detailed description of preferred embodiments of the invention are in accordance with a third aspect of the present invention obtained by a mineral fiber containing product containing mineral fibers, bonded together in an integral structure through a heat-curable bonding agent which is cured by heating to an elevated temperature, the heat-curable bonding agent being initially present in uncured, non-woven mineral fiber webs from which the product is produced as droplets or particles of the heat-curable bonding agent including a heat-expandable agent and constituting less than 10% by weight of the mineral fiber web, the heat-curable bonding agent being caused to expand through the action of the heat-expandable agent by exposure to the elevated temperature generating a volumetric expansion of the droplets or particles (24) of the heat-curable bonding agent of approx. 2 - 1,000 times and increasing the bonding agent contact between the mineral fibers of the non-woven fiber web.

According to the present invention, said heat-curable bonding agent may preferably constitute less than 5%, such as 1-5%, further preferably less than 2%, such as 0.1 - 2% by weight of said mineral fiber web and be caused to expand through the action of the heat-expandable agent generating a volumetric expansion of the droplets or praticles of the heat-curable bonding agent of approx. 5-500 times, further preferably 10-100 times.

The above objects, the above advantages and the above feature together with numerous other objects, advantages, and features which will be evident from the below detailed description of preferred embodiments of the invention are in accordance with a fourth aspect of the present invention obtained by the use of a heat-expandable agent capable of generating a volumetric expansion of droplets or particles of a heat-curable bonding agent to be used for bonding mineral fibers of a non-woven mineral fiber web together by heating the heat curable bonding agent to an elevated temperature for causing droplets or particles of the heat-curable bonding agent constituting less than 10% by weight of the mineral fiber web, to volumetrically expand approx. 2 - 1,000 times by exposure to the elevated temperature for substantially increasing the bonding agent contact between the mineral fibers of the non-woven fiber web, the heat-expandable agent constituting approx. 0.02-50% by weight of the heat-curable bonding agent.

According to the present invention, the heat-curable bonding agent may constitute less than 5% by weight of the mineral fiber web (10, 10' ...), such as 1-5%, further preferably less than 2%, such as 0.1-2% and can volumetrically expand approx. 5-500 times, preferably 10-100 times by exposure to an elevated temperature.

The present invention will now be further described with reference to the drawings, in which
Fig. 1 is a schematic and perspective view illustrating a first production step of producing a mineral fiber-insulating web from a mineral fiber forming melt,
Fig. 2 is a schematic and perspective view illustrating a second production step of processing the mineral fiber-insulating web produced in the steps shown in Fig. 1,
Fig. 3 is a schematic and perspective view illustrating further production steps of curing a mineral fiber-insulating web and of separating the cured mineral fiber-insulating web into plate segments,
Fig. 4 is a diagrammatic view illustrating the viscosity of a heat curable bonding agent in dependency of the temperature of the heat curable bonding agent,
Fig. 5 is a diagrammatic view illustrating the volumetric expansion of a heat curable bonding agent including a heat expandable agent in dependency of the temperature of the heat curable bonding agent,
Figs. 6a, 6b, 6c and 6d are schematic views illustrating four steps of applying a droplet or a particle of a heat curable bonding agent including a heat expandable agent to a mineral fiber, of volumetrically expanding the droplet or particle through expansion of the heat expandable agent, of contacting the droplet or particle to an adjacent mineral fiber and of curing the heat curable bonding agent so as to bond the mineral fibers together,
Figs. 7a and 7b are schematic views similar to the views of Figs. 6a and 6b, respectively, illustrating an alternative technique of providing volumetric expansion of a droplet or particle of a heat curable bonding agent by means of a sphere including a heat expandable fluid,
Fig. 8 is a schematic, sectional and perspective view illustrating a folded mineral fiber-insulating web produced in accordance with the techniques disclosed in DK patent application No. 35/93,
Fig. 9 is a schematic and perspective view illustrating a first embodiment of mineral fiber-insulating plate segment produced in accordance with the technique disclosed in DK patent application No. 35/93 and produced from the folded mineral fiber-insulating web shown in Fig. 8,
Fig. 10 is a schematic, sectional and perspective view illustrating a folded mineral fiber-insulating web produced in accordance with the techniques disclosed in DK patent applications No. 36/93 or No. 37/93,
Fig. 11 is a schematic and perspective view illustrating a second embodiment of a mineral fiber-insulating plate segment produced in accordance with the techniques disclosed in DK patent applications No. 36/93 or No. 37/93,
Fig. 12 is a schematic and perspective view illustrating a third embodiment of a mineral fiber-insulating plate segment produced in accordance with the techniques disclosed in DK patent application No. 36/93 or No. 37/93,
Fig. 13 is a schematic, sectional and perspective view of a fourth embodiment of a mineral fiber-insulating plate produced in accordance with the technique disclosed in DK patent application No. 35/93, and
Fig. 14 is a schematic, sectional and perspective view of a fifth embodiment of a mineral fiber-insulating plate produced in accordance with the technique disclosed in DK patent application No. 35/93.

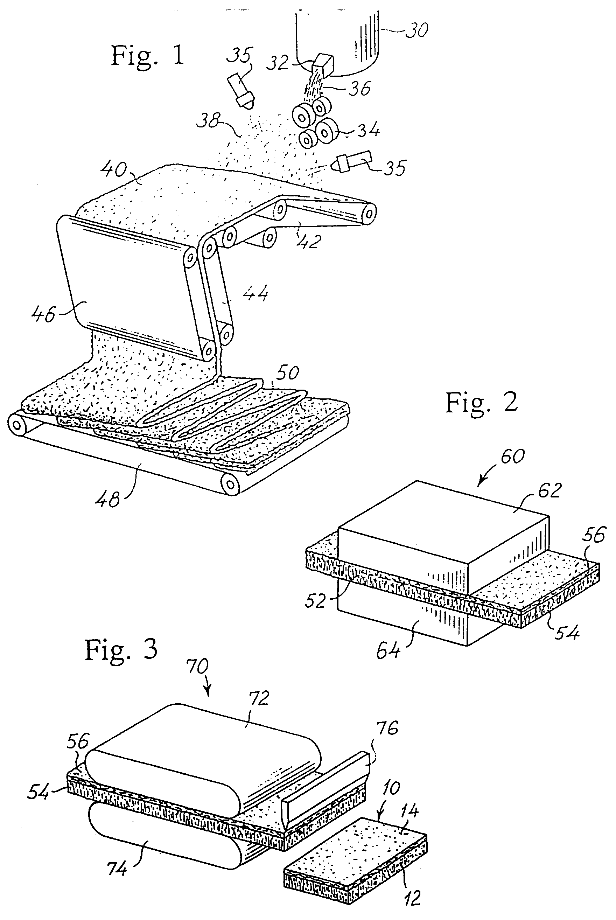

In Fig. 1, a first step of producing a mineral fiber-insulating web is disclosed. The first step involve the formation of mineral fibers from a mineral fiber forming melt which is produced in a furnace 30 and which is supplied from a spout 32 of the furnace 30 to a total of four rapidly rotating spinning-wheels 34 to which the mineral fiber forming melt is supplied as a mineral fiber forming melt stream 36. As the mineral fiber forming melt stream 36 is supplied to the spinning-wheels 34 in a radial direction relative thereto, a cooling gas stream is simultaneously supplied to the rapidly rotating spinning-wheels 34 in the axial direction thereof causing the formation of individual mineral fibers which are expelled or sprayed from the rapidly rotating spinning-wheels 34 as indicated by the reference numeral 38.

By means of two nozzles 35, droplets or particles of a heat curable bonding agent including a heat expandable agent capable of generating a volumetric expansion of the droplets or particles are sprayed onto the mineral fibers 38. The mineral fibers 38 are collected on a continuously operated first conveyer belt 42 forming a primary mineral fiber-insulating web 40. The first conveyer belt 42 is, as is evident from Fig. 1, composed of two conveyer belt sections. A first conveyer belt section which is sloping relative to the horizontal direction and relative to a second substantially horizontal conveyer belt section. The first section constitutes a collector section, whereas the second section constitutes a transport section by means of which the primary mineral fiber-insulating web 40 is transferred to a second and a third continuously operated conveyer belt designated the reference numeral 44 and 46, respectively, which are operated in synchronism with the first conveyer belt 42 sandwiching the primary mineral fiber-insulating web 40 between two adjacent surfaces of the second and third conveyer belts 44 and 46, respectively.

The second and third conveyer belts 44 and 46, respectively, communicate with a fourth conveyer belt 48 which constitutes a collector conveyer belt on which a secondary mineral fiber-insulating web 50 is collected as the second and third conveyer belts 44 and 46, respectively, are swung across the upper surface of the fourth conveyer belt 48 in the transversal direction relative to the fourth conveyer belt 48. The secondary mineral fiber-insulating web 50 is consequently produced by arranging the primary mineral fiber-insulating web 40 in overlapping relation generally in the transversal direction of the fourth conveyer belt 48.

By producing the secondary mineral fiber-insulating web 50 from the primary mineral fiber-insulating web 40 as disclosed in Fig. 1, a more homogeneous secondary mineral fiber-insulating web 50 is produced as compared to the less homogeneous primary mineral fiber-insulating web 40.

It is to be realized that the overall orientation of the mineral fibers of the primary mineral fiber-insulating web 40 is parallel with the longitudinal direction of the web 40 and the direction of transportation of the first conveyer belt 42. Contrary to the primary mineral fiber-insulating web 40 the overall orientation of the mineral fibers of the secondary mineral fiber-insulating web 50 is substantially perpendicular and transversal relative to the longitudinal direction of the secondary mineral fiber-insulating web 50 and the direction of transportation of the fourth conveyer belt 48.

In Fig. 2, a station 60 is shown for processing the secondary mineral fiber insulating web 50 or alternatively the primary mineral fiber-insulating web 40 provided the transport section comprising the conveyer belts 44 and 46 are omitted such as for compacting and homogenizing the mineral fiber-insulating web being the primary or secondary mineral fiber-insulating web input to the station 60. The station 60 may be implemented in accordance with the teachings described in DK patent application No. 35/93, No. 36/93 or No. 37/93. The station 60 comprises two sections 62 and 64 which are arranged at opposite sides of the mineral fiber-insulating web input to the station 60 and serve the purpose of processing the input mineral fiber-insulating web for producing an output mineral fiber-insulating web, which output mineral fiber-insulating web is more compact and more homogeneous as compared to the mineral fiber-insulating web input to the station 60. The output mineral fiber-insulation web produced in the station 60 may further as shown in Fig. 2 be composed of a low compactness body or center core 54 and a compacted top layer 56.

In Fig. 3, the mineral fiber-insulating web assembly produced as discussed above with reference to Fig. 2 and including the low compactness body or center core 54 and the compacted surface layer 56 is moved through a curing station 70 constituting a curing oven or curing furnace comprising oppositely arranged curing oven sections 72 and 74, which generate heat for heating the mineral fiber-insulating web assembly to an elevated temperature so as to cause the heat expandable agent of the heat curable bonding agent to generate a volumetric expansion of the droplets or particles of the heat curable bonding agent as will be described in greater details below, and so as to cause the heat-curable bonding agent of the mineral fiber-insulating web assembly to cure and cause the mineral fibers of the central core or the body of the assembly and the fibers of the compacted surface layer to be bonded together so as to form an integral bonded mineral fiber-insulating web which is cut into plate-like segments by means of a knife 76. In Fig. 3, a single plate-like segment 10 is shown comprising a central core 12 and a top layer 14. The top layer 14 is made front the compacted surface layer 56, whereas the core 12 is made from the low compactness body or central core 54 of the corrugated and longitudinally folded mineral fiber-insulating web shown in Fig. 2.

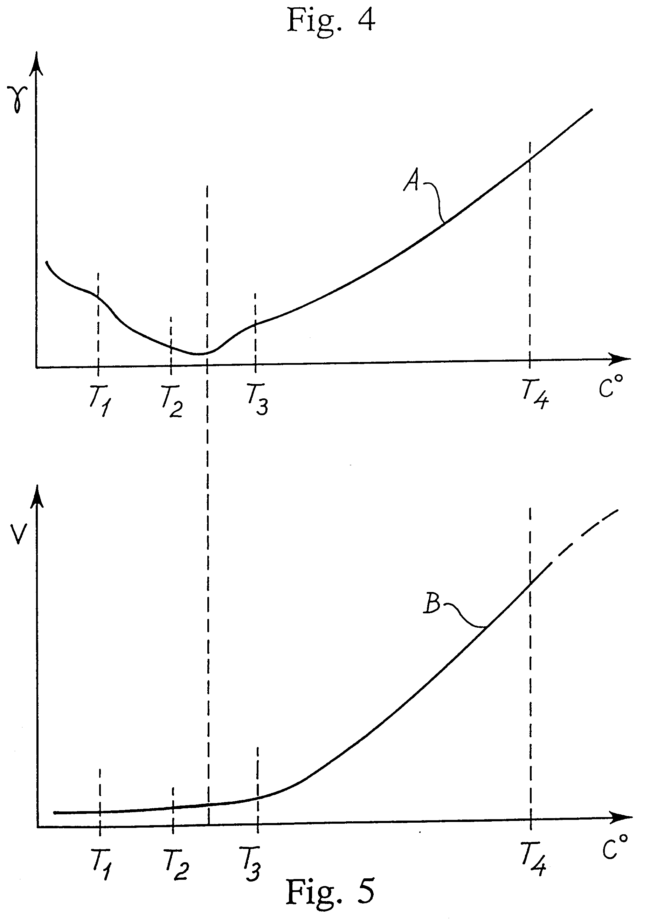

Figs. 4 and 5 are diagrammatic views illustrating the dependency of the viscosity of the heat curable bonding agent used in the first step of producing a mineral fiber-insulating web shown in Fig. 1 and the volumetric expansion of the heat curable bonding agent through the action of a heat expandable agent included in the heat curable bonding agent, respectively, in dependency of the temperature of the heat curable bonding agent. Along the abcissa axes, the temperature is indicated in C°, along the ordinate axis of the diagramme of Fig. 4, the viscosity of the heat curable bonding agent is indicated in logarithmic scale, and along the ordinate axis of the diagramme of Fig. 5, the volume of the heat curable bonding agent is indicated in linear scale. In Fig. 4, a curve A illustrates the profile of viscosity change of the heat curable bonding agent as the heat curable bonding agent is heated from a low temperature to a high temperature.

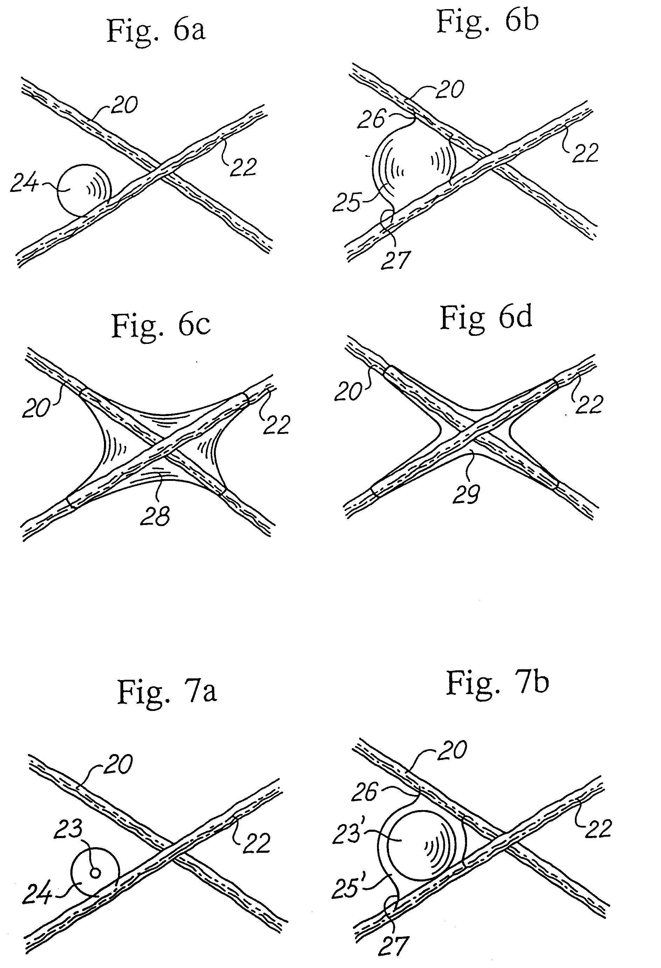

In Fig. 5, a curve B illustrates the volumetric expansion of the heat curable bonding agent as the heat curable bonding agent is heated from the low temperature to the elevated temperature. In Figs. 4 and 5, four temperatures T₁, T₂, T₃ and T₄ are indicated. The temperature T₁ is a temperature of approx. 70-80°C at which the viscosity of the heat curable bonding agent decreases, until a minimum viscosity area corresponding to the temperature interval T₂-T₃ of approx. 90-120°C, within which interval any water present within the heat curable bonding agent evaporates. Within the interval T₃-T₄ the heat expandable agent of the heat curable bonding agent causes a volumetric expansion of the heat curable bonding agent. An elevated temperature T₄ corresponding to a temperature of approx. 170-200°C corresponds to the temperature at which the maximum volumetric expansion of the heat curable bonding agent has been produced and at which the viscosity of the heat curable bonding agent has also increased during the process of curing the heat curable bonding agent. Beyond the temperature T₄, the volumetric expansion capability of the heat expandable agent of the heat curable bonding agent may have decreased as the bonding may have solidified or as the heat expandable agent may have evaporated or deteriorated, as will be described below with reference to Figs. 6 and 7.

In Fig. 6a, two mineral fibers 20 and 22 are shown which mineral fibers are produced at the first step of producing a mineral fiber-insulating web described above with reference to Fig. 1. In Fig. 6a, a particle or droplet 24 of a heat curable bonding agent including a heat expandable agent such as a blowing agent is also shown which droplet or particle is applied to the mineral fiber 22 in a position in which the droplet or particle 24 provides no adhesion between the mineral fiber 22 and the mineral fiber 20 as the droplet or particle 24 provides no contact with the mineral fiber 22.

As the mineral fiber-insulating web containing the mineral fiber 20 and 22 is introduced into the curing station described above with reference to Fig. 3, the heat curable bonding agent is exposed to a temperature profile such as the temperature profile described above with reference to Fig. 4 and also exposed to volumetric expansion caused by the heat expandable agent of the heat curable agent. As the heat curable agent expands as shown i Fig. 6b, the droplet or particle shown in Fig. 4 is expanded into a somewhat enlarged droplet or particle 25 shown in Fig. 6b which establishes contact with the mineral fiber 20 as indicated by the reference numeral 26 still maintaining the contact with the mineral fiber 22 as indicated by the reference numeral 27.

As the heat curable bonding agent including the heat expandable agent is exposed to a further temperature increase, the droplet or particle 25 shown in Fig. 6b is caused to further expand and due to the viscosity of the heat curable bonding agent and further capillary action and surface tension of the expanded droplet or particle caused to provide an enlarged contact area between the mineral fibers 20 and 22 as indicated by the reference numeral 28 shown in Fig. 6b.

As the mineral fibers 20 and 22 and the heat curable bonding agent is further exposed to heat, the heat curable bonding agent cures and provides a cured or solidified linkage between the mineral fibers 20 and 22 as indicated by the reference numeral 29 shown in Fig. 6d.

The volumetric expansion of the heat curable bonding agent droplets or particles may alternatively be provided through microspheres including a heat expandable fluid or gas which microspheres are suspended within the heat curable bonding agent.

In Fig. 7a, the droplet or particle 24 is shown including a microsphere 23 including a heat expandable fluid such as water or a gaseous hydrocarbon composition. As the droplet or particle 24 shown in Fig. 7a is exposed to heat, the microsphere 23 expands through the action of the heat expandable fluid contained within the microsphere 23 providing a radically enlarged microsphere 23' contained within the droplet or particle 25' corresponding to the droplet or particle 25 described above with reference to Fig. 6b. As the microsphere 23' is further heated, the microsphere may burst causing a further enlargement of the heat curable bonding agent contact between the mineral fibers 20 and 22 as shown in Fig. 6c.

Below alternative embodiments of mineral fiber-insulating webs and plate segments are to be described, in which embodiments the technique of volumetric expanding the heat curable bonding agent by means of a heat expandable agent during the process of curing the heat curable bonding agent or prior to the process of curing the heat curable bonding agent is implemented.

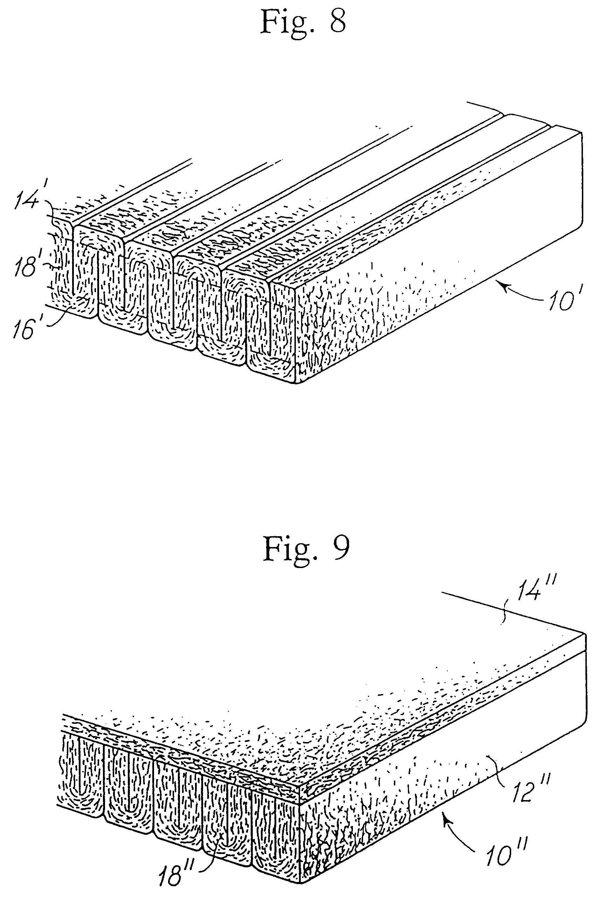

In Fig. 8, a vertical sectional view of a corrugated and transversally folded mineral fiber-insulated web 10' produce in accordance with the teachings of DK patent application No. 35/93 is shown. The corrugated and transversally folded mineral fiber-insulating web 10' comprises a central core or body 18' and two oppositely arranged surface layers 14' and 16', which surface layers 14' and 16' are separated from the central core or body 18' of the corrugated and transversally folded mineral fiber-insulating web 10' along imaginary lines of separation, shown in dotted line. The surface layers 14' and 16' of the corrugated and transversally folded mineral fiber-insulating web 10' are composed of segments of the folded mineral fiber-insulating web which segments contain mineral fibers which are orientated substantially longitudinally relative to the longitudinal direction of the corrugated and transversally folded mineral fiber-insulating web 10'.

The central core or body 18' of the corrugated and transversally folded mineral fiber-insulating web 10' is composed of segments of the folded mineral fiber-insulating web 10' which segments are folded perpendicular to the segments of the surface layers 14' and 16' of the mineral fiber-insulating web 10'. The fibers of the central core of body 18' of the corrugated and transversally folded mineral fiber-insulating web 10' are orientated substantially perpendicular to the longitudinal direction as well as the transversal direction of the corrugated and longitudinally folded mineral fiber-insulating web 10'.

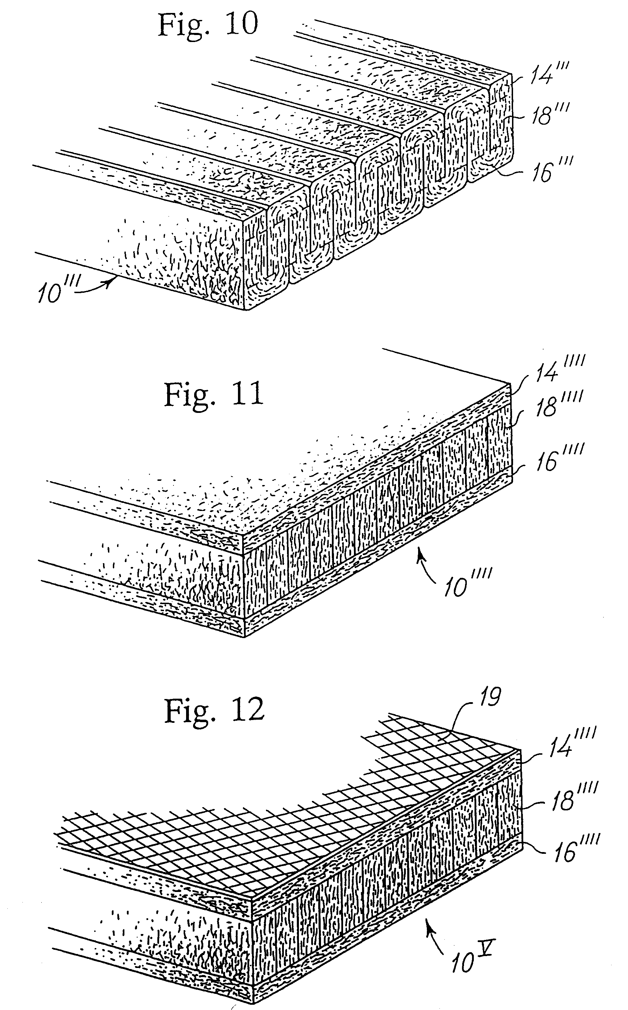

In Fig. 9, a fragmentary and perspective view of a first embodiment of a plate segment 10'' is shown. The plate segment 10'' is produced in accordance with the teachings of DK patent application No. 35/93 from the corrugated and transversally folded mineral fiber-insulating web 10' also shown in Fig. 8 and comprises a central core 18'' and a top layer 14''.

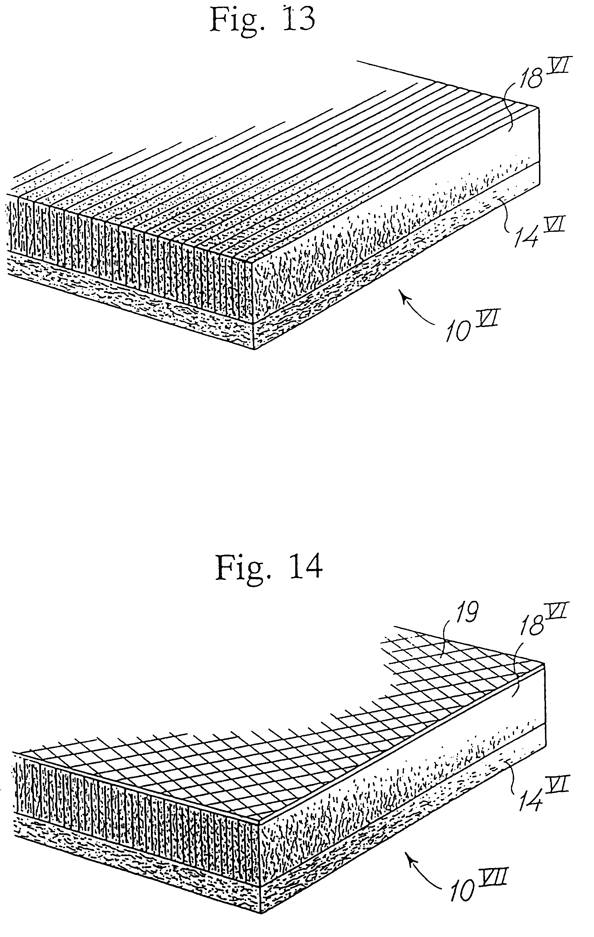

In Fig. 10, a vertical sectional view of a corrugated and longitudinally folded mineral fiber-insulated web 10''' is shown. The corrugated and longitudinally folded mineral fiber-insulating web 10''' is produced in accordance with the teachings of DK patent applications No. 36/93 or No. 37/93 and comprises a central core or body 18''' and two oppositely arranged surface layers 14''' and 16''', which surface layers 14''' and 16''' are separated from the central core or body 18''' of the corrugated and longitudinally folded mineral fiber-insulating web 10''' along imaginary lines of separation shown in dotted line in Fig. 14. The surface layers 14''' and 16''' of the corrugated and longitudinally folded mineral fiber-insulating web 10''' are composed of segments of the folded mineral fiber-insulating web which segments contain mineral fibers which are orientated substantially transversally relative to the longitudinal direction of the corrugated and longitudinally folded mineral fiber-insulating web 10'''.

The central core or body 18''' of the corrugated and longitudinally folded mineral fiber-insulating web 10''' is composed of segments of the folded mineral fiber-insulating web 10''' which segments are folded perpendicular to the segments of the surface layers 14''' and 16''' of the mineral fiber-insulating web 10'''. The fibers of the central core of body 18''' of the corrugated and longitudinally folded mineral fiber-insulating web 10''' are orientated substantially perpendicular to the longitudinal direction as well as the transversal direction of the corrugated and longitudinally folded mineral fiber-insulating web 10'''.

In Fig. 11, a fragmentary and perspective view of a second embodiment of a plate segment according to the present invention and produced in accordance with the teachings of DK patent application No. 36/93 and 37/93 is shown, designated the reference numeral 10'''' in its entirety. The plate segment 10'''' comprises a central core 18'''' and a top layer 14'''' and further a bottom layer 16'''' made from the surface layers 14''' and 16''', respectively, of the mineral fiber-insulating web 10''' shown in Fig. 10.

In Fig. 12, a fragmentary and perspective view of a third embodiment of a plate segment of a mineral fiber-insulating web according to the present invention is shown, designated the reference numeral 10^{V} in its entirety. Like the plate segment 10'''', described above with reference to Fig. 11, the plate segment 10^{V} comprises the central core 18'''', the top layer 14'''' and the bottom layer 16''''. Moreover, a top surface covering 19 is provided. The top surface covering 19 may constitute a web of a plastics material, a woven or non-woven plastic foil, or alternatively a covering made from a non-plastics material, such as a paper material serving design and architectural purposes exclusively. The top surface layer 19 may alternatively be applied to the mineral fiber-insulating web after the expansion of the heat curable bonding agent generated by the heat expandable agent and the curing of the heat-curing, bonding agent, i.e. after the exposure to heat generated by the oven sections 72 and 74 shown in Fig. 3.

In Fig. 13, a fragmentary and perspective view of a fourth embodiment of a mineral fiber-insulating plate assembly 10^{VI} is shown. The mineral fiber-insulating plate assembly 10^{VI} comprises a central core or body 18^{VI} produced from a folded mineral fiber-insulating web as disclosed in DK patent application No. 35/93 and a compacted surface layer 14^{VI}

In Fig. 14, a fragmentary and perspective view of a fifth embodiment of a mineral fiber-insulation plate assembly 10^{VII} is shown. Like the fourth embodiment described above with reference to Fig. 13, the fifth embodiment comprises the central core 18^{VI} and the top layer 14^{VI}. Moreover, a top surface covering 19 is provided.

### EXAMPLE

Mineral fibers of an average diameter of 5 µm were coated with droplets of an average diameter of 50-150 µm of a heat curable bonding agent constituted by an aqueous solution of resin constituting 2% by weight of the finished product. The droplets contained spheres of acrylonitrilvinylidenchloride of an amount of approx. 0.5% by weigth of the heat curable bonding agent. The mineral fibers and the heat curable bonding agent including the heat expandable agent were heated in a curing oven prodiving a heating profile substantially as described above with reference to Figs. 4 and 5. A mineral fiber containing product of a density of 35 kg/m³ was produced. The characteristics as to mechanical performance and the thermal insulating property of this product were identical to those of a conventional mineral fiber containing product of identical density, however, including a much larger amount of cured bonding agent.

## Claims

1. A method of producing a mineral fiber web (10, 10'...), comprising:
producing a non-woven mineral fiber web (10, 10'...) including mineral fibers (38, 20, 22) and droplets or particles (24) of a heat-curable bonding agent and
heating said non-woven mineral fiber web (10, 10'...) to an elevated temperature for causing said heat-curable bonding agent to cure, said heat-curable bonding agent including a heat-expandable agent and constituting less than 10% by weight of said mineral fiber web (10, 10'...), said heat-expandable agent being capable of generating a volumetric expansion of said droplets or particles (24) of approx. 2 - 1,000 times, by exposure to said elevated temperature, and causing said droplets or particles (24) of said heat-curable bonding agent when heated to said elevated temperature to volumetrically expand for substantially increasing said bonding agent contact between said mineral fibers (38, 20, 22) of said non-woven fiber web.

2. The method according to Claim 1, CHARACTERIZED in that said heat-curable bonding agent constitutes less than 5% by weight of said mineral fiber web (10, 10'...), such as 1 - 5% by weight of said mineral fiber web (10, 10'...).

3. The method according to Claims 1 or 2, CHARACTERIZED in that said heat-curable bonding agent constitutes less than 2% by weight of said mineral fiber web (10, 10'...), such as 0,1 - 2% by weight of said mineral fiber web (10, 10'...).

4. The method according to Claims 1-3, CHARACTERIZED in that said heat-expandable agent is capable of generating a volumetric expansion of said droplets or particles (24) of approx. 5 - 500 times.

5. The method according to Claims 1-4, CHARACTERIZED in that said heat-expandable agent is capable of generating a volumetric expansion of said droplets or particles (24) of approx. 10 - 100 times.

6. The method according to any of the Claims 1-5, CHARACTERIZED in that said droplets or particles (24) have diameters prior to exposure to said elevated temperature within the range 3 - 2,000 µm.

7. The method according to any of the Claims 1-6, CHARACTERIZED in that said droplets or particles (24) have diameters prior to exposure to said elevated temperature within the range 10 - 500 µm.

8. The method according to any of the Claims 1-7, CHARACTERIZED in that said droplets or particles (24) have diameters prior to exposure to said elevated temperature within the range 50 - 150 µm.

9. The method according to any of the Claims 1-8, CHARACTERIZED in that said heating of said non-woven mineral fiber web (10, 10'...) comprises progressive heating of said non-woven mineral fiber web (10, 10'...).

10. The method according to any of the Claims 1-9, CHARACTERIZED in that said heat-expandable agent generates said volumetric expansion of said droplets or particles at a temperature of approx. 80-400°C.

11. The method according to any of the Claims 1-10, CHARACTERIZED in that said heat-expandable agent generates said volumetric expansion of said droplets or particles at a temperature of approx. 120-250°C.

12. The method according to any of the Claims 1-11, CHARACTERIZED in that said heat-expandable agent generates said volumetric expansion of said droplets or particles at a temperature of approx. 150-200°C.

13. The method according to any of the Claims 1-12, CHARACTERIZED in that said heat-curable bonding agent cures at a temperature of approx. 40-400°C.

14. The method according to any of the Claims 1-13, CHARACTERIZED in that said heat-curable bonding agent cures at a temperature of approx. 150-200°C.

15. The method according to any of the Claims 1-14, CHARACTERIZED in that said heat-expandable agent is a blowing agent such as an agent liberating a gas, e.g. N₂, CO₂, NH₃, or H₂O, by exposure to an elevated temperature.

16. The method according to Claim 15, CHARACTERIZED in that said heat-expandable agent is azo compounds, carbazides, semicarbazides, hydrazides or combinations thereof.

17. The method according to any of the Claims 1-16, CHARACTERIZED in that said heat-expandable agent is constituted by microspheres (23) each comprising a shell within which a fluid agent is confined.

18. The method according to Claim 17, CHARACTERIZED in that said shell is insoluble by said heat-curable bonding agent.

19. The method according to any of the Claims 17 or 18, CHARACTERIZED in that said shell is made of a thermoplastic material, starch, a polymeric material, such as PP, PE, PVC, polyacrylamides, acrylonitriles, polybutylenes, a copolymeric material or the like or combinations thereof, and said fluid agent being hydrocarbons, such as alcanes, or N₂, CO₂, NH₃ or H₂O or the like or combinations thereof.

20. The method according to any of the Claims 17-19, CHARACTERIZED in that said microspheres (23) have outer diameters of the order of 1-30 µm.

21. The method according to any of the Claims 17-20, CHARACTERIZED in that said microspheres (23) have outer diameters of the order of 2-10 µm.

22. The method according to any of the Claims 17-21, CHARACTERIZED in that said microspheres (23) have outer diameters of the order of 2-5 µm.

23. The method according to any of the Claims 1-22, CHARACTERIZED in that said heat-expandable agent constitutes approx. 0.02-50 % by weight of said heat-curable bonding agent.

24. The method according to any of the Claims 1-23, CHARACTERIZED in that said heat-expandable agent constitutes approx. 0.05-5 % by weight of said heat-curable bonding agent.

25. The method according to any of the Claims 1-24, CHARACTERIZED in that said heat-expandable agent constitutes approx. 0.05-1 % by weight of said heat-curable bonding agent.

26. A heat-curable bonding agent for use in the method according to any of the Claims 1-25 and for bonding mineral fibers (38, 20, 22) of a mineral fiber web (10, 10'...) together and comprising a heat-expandable agent, said heat-curable bonding agent being curable when heated to an elevated temperature, said heat-expandable agent constituting approx. 0.02 - 50% by weight of said heat-curable bonding agent, and being capable of generating a volumetric expansion of droplets or particles (24) of said heat-curable bonding agent of approx. 2 - 1,000 times by exposure to said elevated temperature.

27. The heat-curable bonding agent according to Claim 26,
CHARACTERIZED in that said heat-expandable agent constitutes approx. 0.05 - 5% by weight of said heat-curable bonding agent.

28. The heat-curable bonding agent according to Claims 26 or 27,
CHARACTERIZED in that said heat-expandable agent constitutes approx. 0.05 - 1% by weight of said heat-curable bonding agent.

29. The heat-curable bonding agent according to any of the Claims 26-28,
CHARACTERIZED in that said heat-expandable agent is capable of generating a volumetric expansion of droplets or particles (24) of said heat-curable bonding agent of approx. 5 - 500 times by exposure to an elevated temperature.

30. The heat-curable bonding agent according to any of the Claims 26-29,
CHARACTERIZED in that said heat-expandable agent is capable of generating a volumetric expansion of droplets or particles (24) of said heat-curable bonding agent of approx. 10 - 100 times by exposure to an elevated temperature.

31. The heat-curable bonding agent according to any of the Claims 26-30,
CHARACTERIZED in that said heat-expandable agent generates said volumetric expansion of said droplets or particles at a temperature of approx. 80-400°C.

32. The heat-curable bonding agent according to any of the Claims 26-31,
CHARACTERIZED in that said heat-expandable agent generates said volumetric expansion of said droplets or particles at a temperature of approx. 120-250°C.

33. The heat-curable bonding agent according to any of the Claims 26-32,
CHARACTERIZED in that said heat-expandable agent generates said volumetric expansion of said droplets or particles at a temperature of approx. 150-200°C.

34. The heat-curable bonding agent according to any of the Claims 26-33,
CHARACTERIZED in that said heat-curable bonding agent cures at a temperature of approx. 40-400°C.

35. The heat-curable bonding agent according to any of the Claims 26-34,
CHARACTERIZED in that said heat-curable bonding agent cures at a temperature of approx. 150-200°C.

36. The heat-curable bonding agent according to any of the Claims 26-35,
CHARACTERIZED in that said heat-expandable bonding agent is a blowing agent such as an agent liberating a gas, e.g. N₂, CO₂, NH₃ or H₂O, by exposure to said elevated temperature.

37. The heat-curable bonding agent according to Claim 36,
CHARACTERIZED in that said heat-expandable agent is azo compounds, carbazides, semicarbazides, hydrazides or combinations thereof.

38. The heat-curable bonding agent according to any of the Claims 26-37,
CHARACTERIZED in that said heat-expandable agent is constituted by microspheres (23) each comprising a shell within which a fluid agent is confined.

39. The heat-curable bonding agent according to Claim 38,
CHARACTERIZED in that said shell is insoluble by said heat-curable bonding agent.

40. The heat-curable bonding agent according to any of the Claims 38 or 39,
CHARACTERIZED in that said shell is made of a thermoplastic material, starch, a polymeric material such as PP, PE, PVC, polyacrylamides, acrylonitriles, polybutylenes, a copolymeric material or the like or combinations thereof, and said fluid agent being hydrocarbons, such as alcanes, or N₂, CO₂, NH₃ or H₂O or the like or combinations thereof.

41. A mineral fiber containing product containing mineral fibers (38, 20, 22) bonded together in an integral structure through a heat-curable bonding agent which is cured by heating to an elevated temperature, said heat-curable bonding agent being initially present in uncured, non-woven mineral fiber webs (10, 10'...) from which said product is produced as droplets or particles (24) of said heat-curable bonding agent including a heat-expandable agent and constituting less than 10% by weight of said mineral fiber web (10, 10'...), said heat-curable bonding agent being caused to expand through said action of said heat-expandable agent by exposure to said elevated temperature generating a volumetric expansion of said droplets or particles (24) of said heat-curable bonding agent of approx. 2 - 1,000 times and increasing said bonding agent contact between said mineral fibers (38, 20, 22) of said non-woven fiber web.

42. The mineral fiber-containing product according to Claim 41,
CHARACTERIZED in that said heat-curable bonding agent constitutes less than 5% by weight of said mineral fiber web (10, 10'...), such as approx. 1 - 5% by weight of said mineral fiber web (10, 10'...).

43. The mineral fiber containing product according to any of the Claims 41-42, CHARACTERIZED in that said heat-expandable agent is capable of generating a volumetric expansion of said droplets or particles (24) of said heat-curable bonding agent of approx. 5 - 500 times.

44. The mineral fiber containing product according to any of the Claims 41-43, CHARACTERIZED in that said heat-expandable agent is capable of generating a volumetric expansion of said droplets or particles (24) of said heat-curable bonding agent of approx. 10 - 100 times.

45. The use of a heat-expandable agent capable of generating a volumetric expansion of droplets or particles (24) of a heat-curable bonding agent to be used for bonding mineral fibers (38, 20, 22) of a non-woven mineral fiber web (10, 10'...) together by heating said heat curable bonding agent to an elevated temperature for causing droplets or particles (24) of said heat-curable bonding agent constituting less than 10% by weight of said mineral fiber web (10, 10'...), to volumetrically expand approx. 2 - 1,000 times by exposure to said elevated temperature for substantially increasing said bonding agent contact between said mineral fibers (38, 20, 22) of said non-woven fiber web, said heat-expandable agent constituting approx. 0.02-50% by weight of said heat-curable bonding agent.

46. The use of said heat-expandable agent according to Claim 45, said heat-curable bonding agent constituting less than 5% by weight of said mineral fiber web (10, 10'...), such as 1 - 5% by weight of said mineral fiber web (10, 10'...).

47. The use of said heat-expandable agent according to Claims 45 or 46, said heat-curable bonding agent constituting less than 2% by weight of said mineral fiber web (10, 10'...), such as 0,1 - 2% by weight of said mineral fiber web (10, 10'...).

48. The use of said heat-expandable agent according to any of the Claims 45 - 47, said droplets or particles (24) of said heat-curable bonding agent expanding 5 - 500 times.

49. The use of said heat-expandable agent according to any of the Claims 45 - 48, said droplets or particles (24) of said heat-curable bonding agent expanding 10 - 100 times.

50. The use of said heat-expandable agent according to any of the Claims 45 - 49, said heat-expandable agent constituting approx. 0.05-5% by weight of said heat-curable bonding agent.

51. The use of said heat-expandable agent according to any of the Claims 43 - 50, said heat-expandable agent constituting approx. 0.05-1% by weight of said heat-curable bonding agent.

## Patentansprüche

1. Verfahren zur Herstellung eines Mineralfasergewebes (10, 10'...) umfassend:
Herstellen eines nicht-gewebten Mineralfasergewebes (10, 10'...), das Mineralfasern (38, 20, 22) und Tröpfchen oder Partikel (24) eines durch Wärmeeinwirkung aushärtbaren Klebemittels umfaßt, und
Erwärmen des nicht-gewebten Mineralfasergewebes (10, 10'...) auf eine erhöhte Temperatur, um das durch Wärmeeinwirkung aushärtbare Klebemittel zu veranlassen, auszuhärten, wobei das durch Wärmeeinwirkung aushärtbare Klebemittel ein durch Wärmeeinwirkung ausdehnbares Mittel umfaßt und aus weniger als 10 Gew.-% besagten Mineralfasergewebes (10, 10'...) zusammengesetzt ist, wobei das durch Wärmeeinwirkung ausdehnbare Mittel imstande ist, bei Aussetzung der erhöhten Temperatur eine Volumenausdehnung der Tröpfchen oder Partikel (24) um ungefähr das 2 - 1000fache zu erzeugen und die Tröpfchen oder Partikel (24) des durch Wärmeeinwirkung aushärtbaren Klebemittels, wenn diese auf die erhöhte Temperatur erwärmt werden, veranlaßt, sich volumetrisch auszudehnen, um den Klebemittelkontakt zwischen den Mineralfasern (38, 20, 22) des nicht-gewebten Fasergewebes wesentlich zu erhöhen.

2. Verfahren nach Anspruch 1,
dadurch gekennzeichnet, daß das durch Wärmeeinwirkung aushärtbare Klebemittel weniger als 5 Gew.-% des Mineralfasergewebes (10, 10'...), wie etwas 1 - 5 Gew.-% des Mineralfasergewebes (10, 10'...) ausmacht.

3. Verfahren nach Anspruch 1 oder 2,
dadurch gekennzeichnet, daß das durch Wärmeeinwirkung aushärtbare Klebemittel weniger als 2 Gew.-% des Mineralfasergewebes (10, 10'...), wie etwas 0,1 - 2 Gew.-% des Mineralfasergewebes (10, 10'...) ausmacht.

4. Verfahren nach den Ansprüchen 1-3,
dadurch gekennzeichnet, daß das durch Wärmeeinwirkung ausdehnbare Mittel imstande ist, eine Volumenausdehnung der Tröpfchen oder Partikel (24) auf ungefähr das 5 - 500fache zu erzeugen.

5. Verfahren nach den Ansprüchen 1-4,
dadurch gekennzeichnet, daß das durch Wärmeeinwirkung ausdehnbare Mittel imstande ist, eine Volumenausdehnung der Tröpfchen oder Partikel (24) auf ungefähr das 10 - 100fache zu erzeugen.

6. Verfahren nach einem der Ansprüche 1-5,
dadurch gekennzeichnet, daß die Tröpfchen oder Partikel (24) vor dem Aussetzen der erhöhten Temperatur Durchmesser innerhalb des Bereichs von 3 - 2000 µm aufweisen.

7. Verfahren nach einem der Ansprüche 1-6,
dadurch gekennzeichnet, daß die Tröpfchen oder Partikel (24) vor dem Aussetzen der erhöhten Temperatur Durchmesser innerhalb des Bereichs von 10 - 500 µm aufweisen.

8. Verfahren nach einem der Ansprüche 1-7,
dadurch gekennzeichnet, daR die Tröpfchen oder Partikel (24) vor dem Aussetzen der erhöhten Temperatur Durchmesser innerhalb des Bereichs von 50 - 150 µm aufweisen.

9. Verfahren nach einem der Ansprüche 1-8,
dadurch gekennzeichnet, daß das Erwärmen des nichtgewebten Mineralfasergewebes (10, 10'...) eine progressiv zunehmende Erwärmung des nicht-gewebten Mineralfasergewebes (10, 10'...) umfaßt.

10. Verfahren nach einem der Ansprüche 1-9,
dadurch gekennzeichnet, daß das durch Wärmeeinwirkung ausdehnbare Mittel die Volumenausdehnung der Tröpfchen oder Partikel bei einer Temperatur von ungefähr 80 - 400 °C erzeugt.

11. Verfahren nach einem der Ansprüche 1-10,
dadurch gekennzeichnet, daß das durch Wärmeeinwirkung ausdehnbare Mittel die Volumenausdehnung der Tröpfchen oder Partikel bei einer Temperatur von ungefähr 120 - 250 °C erzeugt.

12. Verfahren nach einem der Ansprüche 1-11,
dadurch gekennzeichnet, daß das durch Wärmeeinwirkung ausdehnbare Mittel die Volumenausdehnung der Tröpfchen oder Partikel bei einer Temperatur von ungefähr 150 - 200 °C erzeugt.

13. Verfahren nach einem der Ansprüche 1-12,
dadurch gekennzeichnet, daß das durch Wärmeeinwirkung aushärtbare Klebemittel bei einer Temperatur von ungefähr 40 - 400 °C aushärtet.

14. Verfahren nach einem der Ansprüche 1-13,
dadurch gekennzeichnet, daß das durch Wärmeeinwirkung aushärtbare Klebemittel bei einer Temperatur von ungefähr 150 - 200 °C aushärtet.

15. Verfahren nach einem der Ansprüche 1-14,
dadurch gekennzeichnet, daß das durch Wärmeeinwirkung ausdehnbare Mittel ein Treibmittel ist, wie etwa ein Mittel, das ein Gas, z.B. N₂, CO₂, NH₃ oder H₂O bei Aussetzung einer erhöhten Temperatur freisetzt.

16. Verfahren nach Anspruch 15,
dadurch gekennzeichnet, daß das durch Wärmeeinwirkung ausdehnbare Mittel Azo-Komponenten, Karbazide, Semikarbazide, Hydrazide oder eine Kombination davon ist.

17. Verfahren nach einem der Ansprüche 1-16,
dadurch gekennzeichnet, daß das durch Wärmeeinwirkung ausdehnbare Mittel durch Mikrokugeln (23) gebildet ist, die jeweils eine Schale umfassen, innerhalb welcher ein Fluidmittel eingeschlossen ist.

18. Verfahren nach Anspruch 17, dadurch gekennzeichnet, daß die Schale durch das durch Wärmeeinwirkung aushärtbare Klebemittel nicht lösbar ist.

19. Verfahren nach einem der Ansprüche 17 oder 18, dadurch gekennzeichnet, daß die Schale aus einem thermoplastischen Material, Stärke, einem Polymermaterial, wie etwa PP, PE, PVC, Polyacrylamiden, Acrylnitrilen, Polybutylenen, einem Copolymermaterial oder dgl. oder Kombinationen davon hergestellt ist, und das Fluidmittel Kohlenwasserstoffe, wie etwa Alkene, oder N₂, CO₂, NH₃ oder H₂O od. dgl. oder Kombinationen davon ist.

20. Verfahren nach einem der Ansprüche 17-19,
dadurch gekennzeichnet, daß die Mikrokugeln (23) einen Außendurchmesser im Bereich von 1 - 30 µm aufweisen.

21. Verfahren nach einem der Ansprüche 17-20,
dadurch gekennzeichnet, daß die Mikrokugeln (23) einen Außendurchmesser im Bereich von 2 - 10 µm aufweisen.

22. Verfahren nach einem der Ansprüche 17-21,
dadurch gekennzeichnet, daß die Mikrokugeln (23) einen Außendurchmesser im Bereich von 2 - 5 µm aufweisen.

23. Verfahren nach einem der Ansprüche 1-22,
dadurch gekennzeichnet, daß das durch Wärmeeinwirkung ausdehnbare Mittel ungefähr 0,02 - 50 Gew.-% des durch Wärmeeinwirkung aushärtbaren Klebemittels ausmacht.

24. Verfahren nach einem der Ansprüche 1-23,
dadurch gekennzeichnet, daß das durch Wärmeeinwirkung ausdehnbare Mittel ungefähr 0,05 - 5 Gew.-% des durch Wärmeeinwirkung aushärtbaren Klebemittels ausmacht.

25. Verfahren nach einem der Ansprüche 1-24,
dadurch gekennzeichnet, daß das durch Wärmeeinwirkung ausdehnbare Mittel ungefähr 0,05 - 1 Gew.-% des durch Wärmeeinwirkung aushärtbaren Klebemittels ausmacht.

26. Durch Wärmeeinwirkung aushärtbares Klebemittel zur Verwendung in dem Verfahren gemäß einem der Ansprüche 1-25 und zum Zusammenkleben von Mineralfasern (38, 20, 22) eines Mineralfasergewebes (10, 10'...) und umfassend ein durch Wärmeeinwirkung ausdehnbares Mittel, wobei das durch Wärmeeinwirkung aushärtbare Klebemittel aushärtbar ist, wenn es auf eine erhöhte Temperatur erwärmt wird, und wobei das durch Wärmeeinwirkung ausdehnbare Mittel ungefähr 0,02-50 Gew.-% des durch Wärmeeinwirkung aushärtbaren Klebemittels ausmacht und imstande ist, bei Aussetzung der erhöhten Temperatur eine Volumenausdehnung der Tropfen oder Partikel (24) des durch Wärmeeinwirkung aushärtbaren Klebemittels auf ungefähr 2 - 1000fache zu erzeugen.

27. Warmhärtbares Klebemittel nach Anspruch 26,
dadurch gekennzeichnet, daß das durch Wärmeeinwirkung ausdehnbare Mittel ungefähr 0,05 - 5 Gew.-% des durch Wärmeeinwirkung aushärtbaren Klebemittels ausmacht.

28. Warmhärtbares Klebemittel nach Anspruch 26 oder 27,
dadurch gekennzeichnet, daß das durch Wärmeeinwirkung ausdehnbare Mittel ungefähr 0,05 - 1 Gew.-% des durch Wärmeeinwirkung aushärtbaren Klebemittels ausmacht.

29. Warmhärtbares Klebemittel nach einem der Ansprüche 26-28, dadurch gekennzeichnet, daß das durch Wärmeeinwirkung ausdehnbare Mittel imstande ist, bei Aussetzung einer erhöhten Temperatur eine Volumenausdehnung von Tröpfchen oder Partikeln (24) des durch Wärmeeinwirkung aushärtbaren Klebemittels von ungefähr dem 5 - 500fachen zu erzeugen.

30. Warmhärtbares Klebemittel nach einem der Ansprüche 26-29, dadurch gekennzeichnet, daß das durch Wärmeeinwirkung ausdehnbare Mittel imstande ist, bei Aussetzung einer erhöhten Temperatur eine Volumenausdehnung von Tröpfchen oder Partikeln (24) des durch Wärmeeinwirkung aushärtbaren Klebemittels von ungefähr dem 10 - 100fachen zu erzeugen.

31. Warmhärtbares Klebemittel nach einem der Ansprüche 26-30, dadurch gekennzeichnet, daß das durch Wärmeeinwirkung ausdehnbare Mittel die Volumenausdehnung der Tröpfchen oder Partikel bei einer Temperatur von ungefähr 80 - 400 °C erzeugt.

32. Warmhärtbares Klebemittel nach einem der Ansprüche 26-31, dadurch gekennzeichnet, daß das durch Wärmeeinwirkung ausdehnbare Mittel die Volumenausdehnung der Tröpfchen oder Partikel bei einer Temperatur von ungefähr 120 - 250 °C erzeugt.

33. Warmhärtbares Klebemittel nach einem der Ansprüche 26-32, dadurch gekennzeichnet, daß das durch Wärmeeinwirkung ausdehnbare Mittel die Volumenausdehnung der Tröpfchen oder Partikel bei einer Temperatur von ungefähr 150 - 200 °C erzeugt.

34. Warmhärtbares Klebemittel nach einem der Ansprüche 26-33, dadurch gekennzeichnet, daß das durch Wärmeeinwirkung aushärtbare Klebemittel bei einer Temperatur von ungefähr 40 - 400 °C aushärtet.

35. Warmhärtbares Klebemittel nach einem der Ansprüche 26-34, dadurch gekennzeichnet, daß das durch Wärmeeinwirkung aushärtbare Klebemittel bei einer Temperatur von ungefähr 150 - 200 °C aushärtet.

36. Warmhärtbares Klebemittel nach einem der Ansprüche 26-35, dadurch gekennzeichnet, daß das durch Wärmeeinwirkung ausdehnbare Mittel ein Treibmittel ist, wie etwa ein Mittel, das ein Gas, z.B. N₂, CO₂, NH₃ oder H₂O bei Aussetzung einer erhöhten Temperatur freisetzt.

37. Warmhärtbares Klebemittel nach Anspruch 36,
dadurch gekennzeichnet, daß das durch Wärmeeinwirkung ausdehnbare Mittel Azo-Komponenten, Karbazide, Semikarbazide, Hydrazide oder eine Kombination davon ist.

38. Warmhärtbares Klebemittel nach einem der Ansprüche 26-37, dadurch gekennzeichnet, daß das durch Wärmeeinwirkung ausdehnbare Mittel durch Mikrokugeln (23) gebildet ist, die jeweils eine Schale umfassen, innerhalb welcher ein Fluidmittel eingeschlossen ist.

39. Warmhärtbares Klebemittel nach Anspruch 38,
dadurch gekennzeichnet, daß die Schale durch das durch Wärmeeinwirkung aushärtbare Klebemittel nicht lösbar ist.

40. Warmhärtbares Klebemittel nach einem der Ansprüche 38 oder 39, dadurch gekennzeichnet, daß die Schale aus einem thermoplastischen Material, Stärke, einem Polymermaterial, wie etwa PP, PE, PVC, Polyacrylamiden, Acrylnitrilen, Polybutylenen, einem Copolymermaterial oder dgl. oder Kombinationen davon hergestellt ist, und das Fluidmittel Kohlenwasserstoffe, wie etwa Alkene, oder N₂, CO₂, NH₃ oder H₂O oder dgl. oder Kombinationen davon ist.

41. Mineralfasern enthaltendes Produkt, das Mineralfasern (38, 20, 22) enthält, die in einer integralen Struktur durch ein durch Wärmeeinwirkung aushärtbares Klebemittel zusammengeklebt sind, das bei einer erhöhten Temperatur aushärtet, wobei das durch Wärmeeinwirkung aushärtbare Klebemittel anfänglich in ungehärteten, nicht-gewebten Mineralfasergeweben (10, 10'...) vorhanden ist, aus welchen besagtes Produkt als Tröpfchen oder Partikel (24) des ein durch Wärmeeinwirkung ausdehnbares Mittel umfassendes und weniger als 10 Gew.-% des besagten Mineralfasergewebes (10, 10'...) ausmachenden, durch Wärmeeinwirkung aushärtbaren Klebemittels erzeugt wird, wobei das durch Wärmeeinwirkung aushärtbare Klebemittel dazu veranlaßt wird, sich durch die Wirkung besagten durch Wärmeeinwirkung ausdehnbares Mittels bei Einwirkung besagter erhöhter Temperatur auszudehnen, was eine Volumenausdehnung der Tröpfchen oder Partikel (24) des durch Wärmeeinwirkung aushärtbaren Klebemittels auf ungefähr das 2 - 1000fache erzeugt, um besagten Klebemittelkontakt zwischen den Mineralfasern (38, 20, 22) und dem nicht-gewebten Fasergewebes zu erhöhen.

42. Mineralfasern enthaltendes Produkt nach Anspruch 41,
dadurch gekennzeichnet, daR das durch Wärmeeinwirkung aushärtbare Klebemittel weniger als 5 Gew.-% des Mineralfasergewebes (10, 10'...), wie etwas 1 - 5 Gew.-% des Mineralfasergewebes (10, 10'...) ausmacht.

43. Mineralfasern enthaltendes Produkt nach einem der Ansprüche 41-42, dadurch gekennzeichnet, daß das durch Wärmeeinwirkung ausdehnbare Mittel imstande ist, eine Volumenausdehnung der Tröpfchen oder Partikel (24) des durch Wärmeeinwirkung aushärtbaren Klebemittels von ungefähr dem 5 - 500fachen zu erzeugen.

44. Mineralfasern enthaltendes Produkt nach einem der Ansprüche 41-43, dadurch gekennzeichnet, daß das durch Wärmeeinwirkung ausdehnbare Mittel imstande ist, eine Volumenausdehnung der Tröpfchen oder Partikel (24) des durch Wärmeeinwirkung aushärtbaren Klebemittels von ungefähr dem 10 - 100fachen zu erzeugen.

45. Verwendung eines durch Wärmeeinwirkung ausdehnbares Mittels, das imstande ist, eine Volumenausdehnung von Tröpfchen oder Partikeln (24) eines durch Wärmeeinwirkung aushärtbaren Klebemittels zu erzeugen, das verwendet wird, um Mineralfasern (38, 20, 22) eines nicht-gewebten Mineralfasergewebes (10, 10'...) durch Erwärmung des durch Wärmeeinwirkung aushärtbaren Klebemittels auf eine erhöhte Temperatur zusammenzukleben, um Tröpfchen oder Partikel (24) des durch Wärmeeinwirkung aushärtbaren Klebemittels, das weniger als 10 Gew.-% des Mineralfasergewebes (10, 10'...) ausmacht, zu veranlassen, sich bei Aussetzung der erhöhten Temperatur volumetrisch um etwa das 2 - 1000fache auszudehnen, um den Klebemittelkontakt zwischen den Mineralfasern (38, 20, 22) des nicht-gewebten Fasergewebes wesentlich zu erhöhen, wobei das durch Wärmeeinwirkung ausdehnbare Mittel ungefähr 0,02 - 50 Gew.-% des durch Wärmeeinwirkung aushärtbaren Klebemittels ausmacht.

46. Verwendung besagten durch Wärmeeinwirkung ausdehnbares Mittels nach Anspruch 45, wobei das durch Wärmeeinwirkung aushärtbare Klebemittel weniger als 5 Gew.-% des Mineralfasergewebes (10, 10'...), wie etwas 1 - 5 Gew.-% des Mineralfasergewebes (10, 10'...) ausmacht.

47. Verwendung besagten durch Wärmeeinwirkung ausdehnbares Mittels nach Anspruch 45 oder 46, wobei das durch Wärmeeinwirkung aushärtbare Klebemittel weniger als 2 Gew.-% des Mineralfasergewebes (10, 10'...), wie etwas 0,1 - 2 Gew.-% des Mineralfasergewebes (10, 10'...) ausmacht.

48. Verwendung besagten durch Wärmeeinwirkung ausdehnbares Mittels nach einem der Ansprüche 45-47, wobei die Tröpfchen oder Partikel (24) des durch Wärmeeinwirkung aushärtbaren Klebemittels sich um das 5 - 500fache ausdehnen.

49. Verwendung besagten durch Wärmeeinwirkung ausdehnbares Mittels nach einem der Ansprüche 45-48, wobei die Tröpfchen oder Partikel (24) des durch Wärmeeinwirkung aushärtbaren Klebemittels sich um das 10 - 100fache ausdehnen.

50. Verwendung besagten durch Wärmeeinwirkung ausdehnbares Mittels nach einem der Ansprüche 45-49, wobei das durch Wärmeeinwirkung ausdehnbare Mittel ungefähr 0,05 - 5 Gew.-% des durch Wärmeeinwirkung aushärtbaren Klebemittels ausmacht.

51. Verwendung des durch Wärmeeinwirkung ausdehnbares Mittels nach einem der Ansprüche 43-50, wobei das durch Wärmeeinwirkung ausdehnbare Mittel ungefähr 0,05 - 1 Gew.-% des durch Wärmeeinwirkung aushärtbaren Klebemittels ausmacht.

## Revendications

1. Procédé de fabrication d'une bande en fibres minérales (10, 10'...) comprenant:
la fabrication d'une bande en fibres minérales non tissées (10, 10'...) comportant des fibres minérales (38, 20, 22) et des gouttelettes ou particules (24) d'un agent de liaison durcissable à chaud et
le chauffage de ladite bande en fibres minérales non tissées (10, 10'...) à une température élevée afin de provoquer le durcissement de l'agent de liaison durcissable à chaud, ledit agent de liaison comprenant un agent d'expansion à chaud et constituant moins de 10 % en poids de ladite bande en fibres minérales (10, 10'...), ledit agent d'expansion à chaud étant capable de produire une expansion volumétrique desdites gouttelettes ou particules (24) de 2 à 1000 fois approximativement, par exposition à ladite température élevée, et provoquant l'expansion volumétrique desdites gouttelettes ou particules (24) dudit agent de liaison durcissable à chaud lorsqu'il est chauffé à ladite température élevée afin d'augmenter sensiblement le contact entre ledit agent de liaison et lesdites fibres minérales (38, 20, 22) de ladite bande en fibres non tissées.

2. Procédé selon la revendication 1, caractérisé en ce que ledit agent de liaison durcissable à chaud constitue moins de 5 % en poids de ladite bande en fibres minérales (10, 10'...), tel que 1 à 5 % en poids de ladite bande en fibres minérales (10, 10'...).

3. Procédé selon la revendication 1 ou 2, caractérisé en ce que ledit agent de liaison durcissable à chaud constitue moins de 2 % en poids de ladite bande en fibres minérales (10, 10'...), tel que 0,1 à 2 % en poids de ladite bande en fibres minérales (10, 10'...).

4. Procédé selon les revendications 1 à 3, caractérisé en ce que ledit agent d'expansion à chaud est capable de produire une expansion volumétrique desdites gouttelettes ou particules (24) de 5 à 500 fois approximativement.

5. Procédé selon les revendications 1 à 4, caractérisé en ce que ledit agent d'expansion à chaud est capable de produire une expansion volumétrique desdites gouttelettes ou particules (24) de 10 à 100 fois approximativement.

6. Procédé selon l'une quelconque des revendications 1 à 5, caractérisé en ce que lesdites gouttelettes ou particules (24) présentent des diamètres avant exposition à ladite température élevée compris dans la plage de 3 à 2000 µm.

7. Procédé selon l'une quelconque des revendications 1 à 6, caractérisé en ce que lesdites gouttelettes ou particules (24) présentent des diamètres avant exposition à ladite température élevée compris dans la plage de 10 à 500 µm.

8. Procédé selon l'une quelconque des revendications 1 à 7, caractérisé en ce que lesdites gouttelettes ou particules (24) présentent des diamètres avant exposition à ladite température élevée compris dans la plage de 50 à 150 µm.

9. Procédé selon l'une quelconque des revendications 1 à 8 caractérisé en ce que ledit chauffage de ladite bande en fibres minérales non tissées (10, 10'...) comprend le chauffage progressif de ladite bande en fibres minérales non tissées (10, 10'...).

10. Procédé selon l'une quelconque des revendications 1 à 9, caractérisé en ce que ledit agent d'expansion à chaud produit ladite expansion volumétrique desdites gouttelettes ou particules à une température de 80 à 400°C approximativement.

11. Procédé selon l'une quelconque des revendications 1 à 10, caractérisé en ce que ledit agent d'expansion à chaud produit ladite expansion volumétrique desdites gouttelettes ou particules à une température de 120 à 250°C approximativement.

12. Procédé selon l'une quelconque des revendications 1 à 11, caractérisé en ce que ledit agent d'expansion à chaud produit ladite expansion volumétrique desdites gouttelettes ou particules à une température de 150 à 200°C approximativement.

13. Procédé selon l'une quelconque des revendications 1 à 12 caractérisé en ce que ledit agent de liaison durcissable à chaud durcit à une température de 40 à 400°C approximativement.

14. Procédé selon l'une quelconque des revendications 1 à 13 caractérisé en ce que ledit agent de liaison durcissable à chaud durcit à une température de 150 à 200°C approximativement.

15. Procédé selon l'une quelconque des revendications 1 à 14, caractérisé en ce que ledit agent d'expansion à chaud est un agent de gonflage tel qu'un agent libérant un gaz, par exemple, N₂, CO₂, NH₃ ou H₂O, par exposition à une température élevée.

16. Procédé selon la revendication 15, caractérisé en ce que ledit agent d'expansion à chaud est issu de composés azoïques, carbazides, semicarbazides, hydrazides, ou de mélanges de ceux-ci.

17. Procédé selon l'une quelconque des revendications 1 à 16, caractérisé en ce que ledit agent d'expansion à chaud est constitué par des microsphères (23), chacune comprenant une enveloppe à l'intérieur de laquelle est confiné un agent fluide.

18. Procédé selon la revendication 17, caractérisé en ce que ladite enveloppe est insoluble dans ledit agent de liaison durcissable à chaud.

19. Procédé selon l'une quelconque des revendications 17 et 18, caractérisé en ce que ladite enveloppe est réalisée en un matériau thermoplastique, en amidon, en un matériau polymère, tel que PP, PE, PVC, polyacrylamides, acrylonitriles, polybutylènes, en un matériau copolymère ou analogue ou des mélanges de ceux-ci, et en ce que ledit agent fluide est composé d'hydrocarbures, tels que des alcanes, ou de N₂, CO₂, NH₃ ou H₂O ou analogue ou de mélanges de ceux-ci.

20. Procédé selon l'une quelconque des revendications 17 à 19, caractérisé en ce que lesdites microsphères (23) présentent des diamètres externes de l'ordre de 1 à 30 µm.

21. Procédé selon l'une quelconque des revendications 17 à 20, caractérisé en ce que lesdites microsphères (23) présentent des diamètres externes de l'ordre de 2 à 10 µm.

22. Procédé selon l'une quelconque des revendications 17 à 21, caractérisé en ce que lesdites microsphères (23) présentent des diamètres externes de l'ordre de 2 à 5 µm.

23. Procédé selon l'une quelconque des revendications 1 à 22, caractérisé en ce que ledit agent d'expansion à chaud constitue de 0,02 à 50 % en poids approximativement dudit agent de liaison durcissable à chaud.

24. Procédé selon l'une quelconque des revendications 1 à 23, caractérisé en ce que ledit agent d'expansion à chaud constitue de 0,05 à 5 % en poids approximativement dudit agent de liaison durcissable à chaud.

25. Procédé selon l'une quelconque des revendications 1 à 24, caractérisé en ce que ledit agent d'expansion à chaud constitue de 0,05 à 1 % en poids approximativement dudit agent de liaison durcissable à chaud.

26. Agent de liaison durcissable à chaud destiné à être utilisé dans le procédé selon l'une quelconque des revendications 1 à 25 et afin d'assurer la liaison de fibres minérales (38, 20, 22) d'une bande en fibres minérales (10, 10'...) l'une à l'autre et comprenant un agent d'expansion à chaud, ledit agent de liaison durcissable à chaud pouvant durcir lorsqu'il est chauffé à une température élevée, ledit agent d'expansion à chaud constituant approximativement de 0,02 à 50 % en poids dudit agent durcissable à chaud, et étant capable de produire une expansion volumétrique des gouttelettes ou particules (24) dudit agent de liaison de 2 à 1000 fois approximativement par exposition à ladite température élevée.

27. Agent de liaison durcissable à chaud selon la revendication 26, caractérisé en ce que ledit agent d'expansion à chaud constitue de 0,05 à 5 % approximativement en poids dudit agent de liaison.

28. Agent de liaison durcissable à chaud selon la revendication 26 ou 27, caractérisé en ce que ledit agent d'expansion à chaud constitue de 0,05 à 1 % en poids approximativement dudit agent de liaison.

29. Agent de liaison durcissable à chaud selon l'une quelconque des revendications 26 à 28, caractérisé en ce que ledit agent d'expansion à chaud est capable de produire une expansion volumétrique des gouttelettes ou particules (24) dudit agent de liaison de 5 à 500 fois approximativement par exposition à une température élevée.

30. Agent de liaison durcissable à chaud selon l'une quelconque des revendications 26 à 29, caractérisé en ce que ledit agent d'expansion à chaud est capable de produire une expansion volumétrique des gouttelettes ou particules (24) dudit agent de liaison de 10 à 100 fois approximativement par exposition à une température élevée.

31. Agent de liaison durcissable à chaud selon l'une quelconque des revendications 26 à 30, caractérisé en ce que ledit agent d'expansion à chaud produit ladite expansion volumétrique desdites gouttelettes ou particules à une température de 80 à 400°C approximativement.

32. Agent de liaison durcissable à chaud selon l'une quelconque des revendications 26 à 31, caractérisé en ce que ledit agent d'expansion à chaud produit ladite expansion volumétrique desdites gouttelettes ou particules à une température de 120 à 250°C approximativement.

33. Agent de liaison durcissable à chaud selon l'une quelconque des revendications 26 à 32, caractérisé en ce que ledit agent d'expansion à chaud produit ladite expansion volumétrique desdites gouttelettes ou particules à une température de 150 à 200°C approximativement.

34. Agent de liaison durcissable à chaud selon l'une quelconque des revendications 26 à 33, caractérisé en ce qu'il durcit à une température de 40 à 400°C approximativement.

35. Agent de liaison durcissable à chaud selon l'une quelconque des revendications 26 à 34, caractérisé en ce qu'il durcit à une température de 150 à 200°C approximativement.

36. Agent de liaison durcissable à chaud selon l'une quelconque des revendications 26 à 35, caractérisé en ce que ledit agent d'expansion à chaud est un agent de gonflage tel qu'un agent libérant un gaz, par exemple, N₂, CO₂, NH₃ ou H₂O, par exposition à ladite température élevée

37. Agent de liaison durcissable à chaud selon la revendication 36, caractérisé en ce que ledit agent d'expansion à chaud est issu de composés azoïques, carbazides, semicarbazides, hydrazides ou de mélanges de ceux-ci.

38. Agent de liaison durcissable à chaud selon l'une quelconque des revendication 26 à 37, caractérisé en ce que ledit agent d'expansion à chaud est constitué par des microsphères (23) comprenant une enveloppe à l'intérieur de laquelle est confiné un agent fluide.

39. Agent de liaison durcissable à chaud selon la revendication 38, caractérisé en ce que ladite enveloppe est insoluble dans ledit agent de liaison.

40. Agent de liaison durcissable à chaud selon l'une quelconque des revendications 38 et 39, caractérisé en ce que ladite enveloppe est réalisée en un matériau thermoplastique, en amidon, en un matériau polymère tel que PP, PE, PVC, polyacrylamides, acrylonitryles, polybutylènes, en un matériau copolymère ou analogue ou des mélanges de ceux-ci, et en ce que ledit agent fluide est composé d'hydrocarbures, tels que des alcanes, ou de N₂, CO₂, NH₃ ou H₂O ou analogue ou de mélanges de ceux-ci.

41. Produit à base de fibres minérales contenant des fibres minérales (38, 20, 22) soudées entre elles en une structure compacte par l'intermédiaire d'un agent de liaison durcissable à chaud qui est durci par chauffage à une température élevée, ledit agent de liaison étant initialement présent non cuit dans des bandes de fibres minérales non tissées (10, 10'...) à partir desquelles ledit produit est réalisé, sous forme de gouttelettes ou particules (24) dudit agent de liaison comprenant un agent d'expansion à chaud et constituant moins de 10 % de ladite bande en fibres minérales (10, 10'...), ledit agent de liaison étant amené à se dilater sous ladite action dudit agent d'expansion à chaud par exposition à ladite température élevée, produisant une expansion volumétrique desdites gouttelettes ou particules dudit agent de liaison de 2 à 1000 fois approximativement et améliorant le contact entre ledit agent de liaison et lesdites fibres minérales (38, 20, 22) de ladite bande en fibres non tissées.

42. Produit à base de fibres minérales selon la revendication 41, caractérisé en ce que ledit agent de liaison durcissable à chaud constitue moins de 5 % en poids de ladite bande en fibres minérales (10, 10'...), tel que 1 à 5 % en poids approximativement de ladite bande en fibres minérales (10, 10'...).

43. Produit à base de fibres minérales selon l'une quelconque des revendications 41 et 42, caractérisé en ce que ledit agent d'expansion à chaud est capable de produire une expansion volumétrique desdites gouttelettes ou particules (24) dudit agent de liaison durcissable à chaud de 5 à 500 fois approximativement.

44. Produit à base de fibres minérales selon l'une quelconque des revendications 41 à 43, caractérisé en ce que ledit agent d'expansion à chaud est capable de produire une expansion volumétrique desdites gouttelettes ou particules (24) dudit agent de liaison durcissable à chaud de 10 à 100 fois approximativement.

45. Utilisation d'un agent d'expansion à chaud capable de produire une expansion volumétrique des gouttelettes ou particules (24) d'un agent de liaison durcissable à chaud destiné à être utilisé pour la liaison des fibres minérales (38, 20, 22) d'une bande en fibres minérales non tissées (10, 10'...) l'une à l'autre par chauffage dudit agent de liaison à une température élevée afin de provoquer l'expansion volumétrique des gouttelettes ou particules (24) dudit agent de liaison constituant moins de 10 % en poids de ladite bande en fibres minérales (10, 10'...), de 2 à 1000 fois approximativement par exposition à ladite température élevée afin d'améliorer de manière sensible le contact entre ledit agent de liaison et lesdites fibres minérales (38, 20, 22) de ladite bande en fibres non tissées, ledit agent d'expansion à chaud constituant de 0,02 à 50 % en poids approximativement dudit agent de liaison durcissable à chaud.

46. Utilisation dudit agent d'expansion à chaud selon la revendication 45, ledit agent de liaison durcissable à chaud constituant moins de 5 % en poids de ladite bande en fibres minérales (10, 10'...), tel que 1 à 5 % en poids de ladite bande en fibres minérales (10, 10'...).

47. Utilisation dudit agent d'expansion à chaud selon la revendication 45 ou 46, ledit agent de liaison durcissable à chaud constituant moins de 2 % en poids de ladite bande en fibres minérales (10, 10'...), tel que 0,1 à 2 % en poids de ladite bande en fibres minérales (10, 10'...).

48. Utilisation dudit agent d'expansion à chaud selon l'une quelconque des revendications 45 à 47, lesdites gouttelettes ou particules (24) dudit agent de liaison durcissable à chaud présentant une expansion de 5 à 500 fois.

49. Utilisation dudit agent d'expansion à chaud selon l'une quelconque des revendications 45 à 48, les gouttelettes ou particules (24) dudit agent de liaison durcisssable à chaud présentant une expansion de 10 à 100 fois.

50. Utilisation dudit agent d'expansion à chaud selon l'une quelconque des revendications 45 à 49, ledit agent d'expansion à chaud constituant de 0,05 à 5 % en poids approximativement dudit agent de liaison durcissable à chaud.

51. Utilisation dudit agent d'expansion à chaud selon l'une quelconque des revendications 43 à 50, ledit agent d'expansion à chaud constituant de 0,05 à 1 % en poids approximativement dudit agent de liaison durcissable à chaud.
